# EUROPEAN PATENT SPECIFICATION

(11) **EP 3 429 043 B1**
(45) Date of publication and mention of the grant of the patent: **04.05.2022**
(21) Application number: 17181400.7
(22) Date of filing: 14.07.2017
(51) Int. Cl.: H02G 15/18, B29C 65/00, B29C 65/34, B29C 65/36, B29C 61/06

(54) **HEAT SHRINK COMPONENT WITH HEAT SPREADING LAYER, AND METHOD OF ASSEMBLING A HEAT SHRINK COMPONENT**
WÄRMESCHRUMPFBARE KOMPONENTE MIT EINER WÄRMEVERTEILUNGSSCHICHT UND VERFAHREN ZUR MONTAGE EINER WÄRMESCHRUMPFBAREN KOMPONENTE
COMPOSANT THERMORÉTRÉCISSABLE AYANT UNE COUCHE DE DISSIPATION THERMIQUE ET PROCÉDÉ D'ASSEMBLAGE D'UN COMPOSANT THERMORÉTRÉCISSABLE

(43) Date of publication of application: 16.01.2019
(73) Proprietor: Tyco Electronics Raychem GmbH, 85521 Ottobrunn (DE)
(72) Inventor: SIMONSOHN, Thilo, 81735 München (DE); HEINDL, Christian, 80807 München (DE)
(74) Representative: Grünecker Patent- und Rechtsanwälte PartG mbB

(56) References cited:
- EP-A1- 0 008 912
- WO-A1-02/19494
- DE-A1- 2 410 289
- FR-A1- 2 512 394
- US-A- 4 421 582

## Description

The present invention relates to a heat shrink component and to a method of assembling a heat shrink component.

Heat shrink components in the sense of the present invention relate to articles that are made from material which shrinks from an expanded state into a shrunk state with much smaller dimensions by applying a sufficient amount of heat. Heat shrink components (also called heat shrink products in the following) are widely spread as joint sleeves or other cable accessories.

The present invention utilizes a heat-recoverable article (an independently dimensionally heat-unstable article) as a heat shrink layer. In general, such an article is made of a material capable of having the property of elastic or plastic memory imparted thereto which is heated to a certain temperature and distorted under pressure to a configuration different from its normal configuration and then cooled while kept under pressure. If the article is made of a material which is wholly or partly crystalline, is at least partly cross-linked in the amorphous areas, and is distorted at a temperature at or above the crystalline melting point of the material, the article will have elastic memory. An article with elastic memory will not recover towards its original configuration until it is again heated at least to its crystalline melting temperature. If the article is made of a non-crystalline material, it is heated to a temperature at which the article can be distorted by pressure, and the distorted article then has the property of plastic memory. Examples of heat-recoverable materials are found in U.S. Pat. No. 2,027,962 and U.S. Pat. No. 3,086,242. Of course the heat shrink layer can be fabricated from any suitable material, as this is known to a person skilled in the art. Moreover, also multilayer arrangements that additionally comprise elastic and/or electrically semi-conductive and conductive layers are encompassed by the present invention.

In order to install heat shrink products for LV, MV, and HV applications, typically open flames, such as gas torches, are used. More rarely, also hot air guns with several kilo watt of power are employed. Hot air guns, however, are limited to thin walled products, like LV sleeves and molded parts with a low wall thickness in the range of 1 to 4 mm. For instance for electronic applications, where sleeves typically have wall thicknesses below 1 mm in the expanded state, hot air guns or tunnel heaters with ceramic radiation features are commonly used.

However, from the standpoint of safety at work, the use of open flames is disadvantageous. Furthermore, it is desired to reduce the amount of energy needed for installing products. In some cases it is also desired to reduce the amount of heat generated during installation. Consequently, it is desirable to use other energy sources than open flames, preferably electrical energy.

It is known to shrink heat shrinking products by adding at least one layer to the product that transforms electrical energy into heat. From DE 1941327 A1, an electrically conductive heat-recoverable article is known which is caused to recover by passing an electrical current through the article to raise it to its recovery temperature. The conductive article, e.g. a tubular sleeve, is placed in good heat-transfer relationship to an electrically non-conductive heat recoverable member, e.g. a tubular sleeve, so as to act as heater for this non-conductive member, the two members recovering substantially simultaneously. The conductive material of the sleeve is carbon-black filled cross-linked polyethylene which is made heat-recoverable. Other cross-linked polymers, non-crystalline polymers such as polyurethane and ionomers, as well as elastomers such as silicone rubber are disclosed. A conductive sleeve is surrounded by two insulating sleeves, or a slit conductive sleeve surrounds a heat-recoverable non-conductive sleeve and is peeled away after the non-conductive sleeve is fully recovered. Electrical connections to the conductive sleeves are established via alligator clips or other conventional clamps or electrodes.

However, these known arrangements suffer from the disadvantage that the time required for the shrinking step is usually above 15 minutes even for thin walled sleeves and therefore too long to be cost effective.

Furthermore, it is known to provide heating systems with fluid pipes in order to prevent fluid conducted by the pipes from freezing. These defrosting systems, however, allow only maximum temperatures of about 60 to 80°C and are therefore not applicable for shrinking heat shrink products which require temperatures above 120°C.

Outside the field of energy technology, it is known to use electrical heating for jointing pipes by means of thermoplastic coupling parts. As for instance disclosed in European patents EP 1190839 B1 and EP 0798099 B1, a molded part with embedded wires is positioned over the end portions of the two pipes to be joined. An electronic drive system linked to a power source then generates sufficient heat to melt the ends of the pipes which then are welded with each other and/or the molded part. For this field of application, the pipes essentially do not change their original diameter and each joint component is only used for one particular diameter of pipes. When applying such a system to a heat shrink component which usually undergoes a diameter reduction of around 10 % to 75 % of the expanded diameter during the heat shrink process, the molded part would lose mechanical contact to the heat shrink product.

Finally, there exist multiple heating systems in the art which are based on resistance wires. These wires are made from special metal alloys that have resistance values which are about 10 to 100 times higher than those of copper or aluminum. The disadvantage of using resistance heating wires can be seen in the fact that these standard resistance heating wires have a high specific resistance and therefore provide a high density of dissipated heat energy, so that for reaching a temperature of 120°C and higher by applying a voltage of about 24 V, only a short length of wire is needed. This rather short wire length causes severe problems to properly distribute the heat over the entire surface and volume of a typical heat shrink product such as an MV joint body. In addition, the costs of heating wires are much higher than of for instance copper wire.

EP 0 008 912 A1 relates to a heat shrinkable synthetic resin cover adapted to cover a joint between two pipes or an electric cable. The cover comprises a heat shrinkable synthetic resin member in which is embedded a flexible electric heating element made of a conductor coated with a cross-linked polymer having heat shrinkability in substantially one direction such that the electric heating member does not preclude heat shrinkage of the heat shrinkable synthetic resin member in said direction.

DE 24 10 289 A1 relates to a composite plastics article which comprises a heat-shrinkable plastics matrics coated with layer(s) adapted to generate heat which is transmitted to the plastics article, causing it to shrink as intended. Shrinking proceeds preferred perpendicularly to the outer surface of the plastics article. There may be an intermediate, protective layer between heat-generating layer(s) and the plastics.

FR 2 512 394 A1 relates to a wrap-round shield for protecting thermoplastic insulation on electric wiring from external overheating which has a composite structure involving a layer of flexible or semi-rigid heat-resistant material coated on each face with a layer of melt adhesive material. Opt. the heat resistant material is lined on at least one face with a layer of material which will conduct and/or reflect heat, e.g. aluminum foil.

WO 02/19494 A1 relates to a reinforcement for a heat shrinkable sleeve and a heat shrinkable sleeve containing the same. A heat shrinkable sleeve and a reinforcement thereof are provided, wherein the polymer of the inner layer having a high melting point remains intact even after heat treatment, and it binds with a fabric firmly, owing to the cross-linking of the polymer of the outer layer having high melting point, a fabric, another inner layer polymer having high melting point and a polymer layer having low melting point, so that the heat shrinkable sleeve becomes more resistant to the inner air pressure and the outside air when the reinforcement is applied to an air injection type heat shrinkable sleeve, an d its bursting can be prevented during heat recovery. In addition, a heat shrinkable sleeve and reinforcement thereof are provided, which can significantly shorten the time for heat recovery or heat shrinking by reducing the total thickness of the reinforcement to about one third of the thickness of conventional products.

Moreover, it was found that when using wires for heating up the heat shrink material within the allowed time (e. g. 10 min for a thicker walled MV joint body), they may have temperatures of 150°C or higher, sometimes even to 450°C. In these cases, the direct contact of the hot wires may cause the heat shrink material to fail due to material degradation. For instance, splitting of a heat shrink sleeve or the destruction of thin superficial conductive layers on the heat shrink sleeve may occur, resulting in electrical failure once the cable accessory is energized. Thus, it has to be ensured that heating wires can be operated to generate high temperatures, at the same time avoiding harming the heat shrink component.

Apart from avoiding temperature peaks and local overheating at the electrically conductive leads, a fast and even energy input towards the heat shrink material is of utmost significance for achieving the short shrinking durations that are required to be market competitive. In particular, a fast and even shrinkage of an essentially tubular heat shrink component around its entire circumference has to be ensured. Heat shrink cable accessories change their diameter by large degrees in the course of their installation process in order to conform to various cable diameters. These range taking properties strongly influence the heating system. An even shrinkage is important for cable accessories in order to close axial interfaces of joints and terminations. If the heat shrink product is a sleeve that has the purpose of sealing against the environment, an even shrinking is needed for instance to melt a hot melt arranged on the inside of the sleeve and to soften the sleeve itself in order to allow for a proper sealing.

An even shrinkage around the circumference can happen during two major phases: firstly, when heating up the heat shrink component and during its visible shrinking, and secondly, after the heat shrink product has essentially shrunk onto the substrate. The latter is about consolidation of uneven heating.

When using standard gas torches, heat may be applied so unevenly that the product may shrink down and sit on the cable, but one side may have remained cold. Especially hot melt sealants or electrically active layers on the inside of terminations may not be sufficiently heated up, resulting in electrical failure or leakages and water ingress.

The object underlying the present invention is to provide a heat shrink component and a method of shrinking a heat shrink component with an improved performance and reliability, thereby overcoming, or at least substantially reducing the above mentioned problems and drawbacks.

This object is solved by the subject matter of the independent claims. Advantageous embodiments of the present invention are the subject matter of the dependent claims.

The present invention is based on the idea that by providing a heat spreading layer in thermal contact to the at least one electrically conductive lead for distributing the heat generated by the electrically conductive lead, a more uniform distribution of the heat around the entire circumference of the heat shrink layer can be achieved. Therefore, an even radial shrinking of the heat shrink component within a particularly short time can be achieved. Moreover, the heat spreading layer serves the purpose of avoiding heat peaks that might damage the heat shrink layer.

It has to be noted that when referring to a "layer" in the following, it is not intended to mean that the object underneath has to be covered completely by the layer.

In particular, according to the present invention, a heat shrink component is provided that has first dimensions in an expanded state and second dimensions in a shrunk state, at least one of the first dimensions being larger than the corresponding second dimension. The heat shrink component comprises a heat shrink layer and at least one heating unit that is arranged in thermal contact to at least a part of said heat shrink layer, said heating unit being operable to heat up the heat shrink layer to its heat shrink temperature. The heat shrink temperature is defined as the temperature to which the heat shrink layer has to be heated in order to recover towards its original configuration, preferably to heat shrink temperatures which are around 120 °C in many cases. The heating unit comprises at least one electrically conductive lead for being heated by an electrical current flowing through the lead, and a heat spreading layer arranged in thermal contact to the at least one electrically conductive lead for circumferentially and/or axially distributing the heat generated by the electrically conductive lead. Advantageously, this concept allows running metal wires at high temperatures and ensures a fast and even heat transfer to the heat shrink layer. Shrinking times of approximately 10 min can be achieved for a typical MV joint body.

Moreover, by providing a heat spreading layer arranged between the electrically conductive lead and the heat shrink layer for distributing the heat generated by the electrically conductive lead, a more uniform distribution of the heat at the heat shrink layer can be achieved. Therefore, heat peaks that might destroy or damage the heat shrink layer can be avoided or their likelihood can be significantly reduced.

It was found that specific metal films and/or polymeric films and/or multilayer films (i. e. metal/polymeric combinations) used as a heat spreading layer are suitable to address the above-mentioned problems. According to the present invention, metal layers or layers with a high thermal conductivity are distributing the heat energy in a direction along the circumference of the heat shrink component. Polymeric films are to be selected among the high temperature resistant ones which do not get too soft and/or degrade when being subjected to the heat. The heat spreading film layers optionally can be coated with an adhesive, a hot melt, a lubricant, or the like to enclose the heating wires and further improve heat transfer in a circumferential and axial direction. The thickness of the heat spreading layer advantageously is in the range of several micrometers, preferably below 400 µm, in order to ensure that the heat spreading layer folds and/or conforms sufficiently smooth under the thermal and mechanical conditions when the heat shrink layer shrinks into the final size. If the heat spreading layer is positioned only locally, then the thickness is preferably below 1 mm. Multiple layers of a material with heat spreading properties may be arranged adjacent to each other. This may be achieved by winding several layers of a film around a sleeve.

According to an advantageous embodiment, the heat spreading layer comprises at least one metal layer. It has to be noted that the present invention is intended to encompass also cases where the heat spreading layer and the electrically conductive lead are formed as one integral metal film thereby providing a quite uniform, almost peakless heat transfer into the heat shrink layer.

A sufficient ease of folding and/or conforming is important for maintaining the mechanical contact of the heating unit to the heat shrink layer and is also important to avoid any damages to the surface of the heat shrink product. At the elevated temperatures during the shrinking process heat shrink layers are mechanically sensitive and the surfaces can be deformed or punctured easily.

For instance, copper or aluminium may advantageously be used. It is clear for a person skilled in the art that any other metal or metal alloy can also be employed. Copper and aluminium have the advantage that they have excellent heat conduction properties, while being corrosion resistant and cost effective. Alternatively, materials with fillers performing good thermal conductivity can be used. Advantageously, the at least one heat spreading layer is arranged between the at least one electrically conductive lead and the heat shrink layer. This arrangement has the advantage that the heat spreading layer is in close proximity to the heat shrink layer, thus effectively transferring the generated heat into the heat shrink material. Moreover, heat peaks that might destroy or damage the heat shrink layer can be avoided, thus avoiding destruction of the material and the components of e. g. cable accessories.

It was found that polymeric layers even with wall thicknesses below 400 µm and even below 100 µm can perform an effect to avoid heat peaks.

Alternatively or additionally, a heat spreading layer can be provided that is arranged to encompass the at least one electrically conductive lead and the heat shrink layer. Such a construction is compatible with geometries where the electrically conductive leads are applied directly on the heat shrink layer, for instance in the form of printed conductive traces, or when embedded in layers that are e. g. co-extruded with the heat shrink layer.

According to a further advantageous embodiment of the present invention, the heating unit further comprises at least one thermally insulating layer. The term "thermally insulating layer" in the context of the present invention is intended to signify a layer fabricated from a material that has a significantly lower thermal conductivity than the heat spreading layer. Thermally insulating layers may advantageously be arranged around the heating unit to reduce the dissipation of heat to the outside, thereby enhancing the energy efficiency of the shrinking process. Moreover, one or more thermally insulating layers may also be provided between the heat spreading layer and the heat shrink layer to enhance the effect of the heat distribution in an axial and circumferential direction mainly within the metal layers. A basic principle for distributing heat within layers rather than through the layers is to stack thermally more and thermally less conductive materials alternatingly. For instance, metallic and polymeric layers can be alternated. Moreover, it was found that also meshes or films with cutouts can be used as thermally less conductive layers. Also a mesh formed from a non-organic fabric can be used as a thermally less conductive layer.

According to the present invention, the electrically conductive lead is at least partly embedded within an embedding material. Means to embed the metal wire were found useful to reduce the chance of overheating the metal wires.

In order to achieve a short shrinking time (e. g. 10 minutes for an MV joint body), it is important to continuously supply heat all the time while the heat shrink product contracts. Using heat conduction as the means of heat transfer solves this object. In order to provide sufficient heat conduction, an intimate contact of the heating wires together with the heat spreading films and the embedding means located between the wires and the heat shrink layer and/or around the wires, has to be ensured. For instance, the heating unit can be adhesively bonded to the heat shrink layer. This is a particularly simple way of interconnecting all parts of the heat shrink component.

Alternatively or additionally, the heating unit is arranged on an outer surface of the heat shrink layer and the heat shrink component further comprises a compressing element, the electrically conductive lead being arranged between said compressing element and the heat shrink layer, so that the compressing element presses the electrically conductive lead towards the heat shrink layer at least during a part of the time while the heat shrink layer is heated, preferably during most or all of the heating time. The compressing element exerts a mechanical force directed towards the center of the heat shrink component, so that the heating unit always remains in close contact with the heat shrink layer while the diameter of the heat shrink layer diminishes. The compressing element may for instance comprise a spring or a spring system or objects having an elastic behavior, such as elastomeric components, which are pre-stretched when the heat shrink layer is in the expanded state. Furthermore, as compressing element an object may be provided with an elastic behavior at least at the thermal conditions when the heat shrink part shrinks, such as an additional heat shrink sleeve, which is in the expanded state when the heat shrink layer is in the expanded state.

When using an electrically conductive lead with a comparably high electrical conductivity for heating a heat shrink layer of any kind of conductivity, including electrically insulating layers, and by setting the overall electrical resistance via the dimension of the lead's cross-section, the temperature for shrinking LV, MV, or HV heat shrink components in a sufficiently short time span can be reached using a length of the electrically conductive lead which is long enough to achieve a much higher percentage covering of the surface area than when using resistance wires. It could be shown that an electrically conductive lead with an electrical conductivity of more than 1·10⁷ S/m, preferably more than 2.2·10⁷ S/m (for instance copper having an electrical conductivity of 6.0·10⁷ S/m or aluminium having an electrical conductivity of 3.76·10⁷ S/m), can have a length of about 1 to 15 m when the cross-sectional area is chosen accordingly (e. g. less than 1 mm, preferably less than 0.4 mm diameter for a circular cross-section). The resulting overall resistance of such heating systems may for instance be in a range of 0.3 Ω to 6.0 Ω at 23 °C and the electrically conductive lead can be powered with 5 V to 25 V. Using a material with such comparably high electrical conductivity together with an appropriately reduced cross-sectional area allows covering a larger amount of the surface area of the heat shrink component. More precisely, the circumferential distance between heating wires may be below 50 mm, preferably below 20 mm, in the non-recovered condition, thus remarkably reducing any issues with distributing the heating energy. Moreover, much cheaper wire materials can be used compared to using typical resistance wires. Of course, more than one such heating system can be used.

According to the invention, the electrically insulating heat shrink layer is formed at least partly as a sleeve with a longitudinal axis for covering at least one electrical connection. Such sleeves are for instance part of high-voltage cable accessories.

High-voltage cable accessories are in use for the connection of high-voltage power cables to electrical equipment such as overhead lines, transformers, search arrestors, switchgears etc. They provide the function to either insulate or control the electrical field of power cables at different ambient conditions.

The term "high-voltage" as used in the following is intended to relate to voltages above approximately 1 kV. In particular, the term high-voltage is intended to comprise the usual nominal voltage ranges of power transmission, namely medium voltage, MV, (about 3 kV to about 72 kV), high-voltage, HV, (about 72 kV to about 245 kV), and also extra high-voltage (up to presently about 500 kV). Of course also higher voltages may be considered in the future. These voltages may be direct current (DC) or alternating current (AC) voltages. In the following, the term "high-voltage cable" is intended to signify a cable that is suitable for carrying electric current of more than about 1 A at a voltage above approximately 1 kV. Accordingly, the term "high-voltage accessory" is intended to signify a device that is suitable for interconnecting high-voltage facilities and/or high-voltage cables. In particular, a high-voltage accessory may either be an end termination or a cable joint.

The present invention is also applicable to the so-called "low-voltage", LV, range that relates to voltages below 1 kV. The principles of the present invention may further be applied to heat shrink products used for electronic applications.

The expression "sleeve" according to the present invention is intended to signify straight tube shaped sleeves as well as differently shaped covers for branch joints, elbows, bends, breakouts, wrap-arounds, sheds, and the like.

According to the invention, the heating unit is arranged on an outer surface of the sleeve. This allows foi an easy manufacturing of the heat shrink component. The heating unit may be arranged directly on the outer surface of the sleeve or with additional layers between the sleeve and the heating unit. However, the heating unit may of course also be arranged on the inner surface of the sleeve or within the sleeve or at some location in a stack of sleeves, in order to protect the heating unit from being damaged before the installation takes place, or to improve heat transfer.

According to an advantageous embodiment of the present invention, the electrically conductive lead is formed by a metal wire having a cross-section with a round, oval, or polygonal shape. As mentioned above, the cross-section is formed to be small enough to generate an overall ohmic resistance that leads to a sufficient heating also with small safety voltages.

The electrically conductive lead according to the present invention may also be formed by an electrically conductive film. Such a thin electrically conductive film may be fabricated by etching and photolithography, or screen printing technologies as this is known to a person skilled in the art. Moreover, the electrically conductive film may either be fabricated directly on the heat shrink layer or on an intermediate layer or on a carrier layer or a foil that is attached to the heat shrink layer after the metallization pattern has been structured.

According to the present invention, the electrically conductive lead may comprise copper and/or aluminium. Advantageously, no expensive heating wire alloys, such as nickel chrome iron alloys or Constantan ^{®} are needed. However, also metal alloys having the high conductivity according to the present invention may be used to form the electrically conductive lead.

The present invention further relates to a method of assembling a heat shrink component according to claim 10.

Advantageously, a safety voltage, provided for instance from a battery, is used to heat up the heating unit. In the context of the present invention, "safety voltage" means for example a DC voltage that is below 60 V or an AC voltage of 25 V RMS. Preferably, a battery generated DC voltage of 24 V is used. The heating preferably takes place for most of or all the time until the heat shrink component has reached the final shrunk dimensions.

According to an advantageous embodiment, the heat shrink component is an LV, MV, or HV cable accessory.

The method according to the present invention requires that the heat shrink component is heated to a temperature of at least 120 °C during a heating time of 20 min or less, depending on the wall thickness and material composition of the heat shrink component. This short time is compatible with the time span for shrinking conventional products with an open flame.

Due to the inherent large degree of diameter reduction of heat shrink cable accessories, the circumferential spacing of the heating wires decreases gradually during the shrinking process, resulting in an increasing heat density. This effect may be compensated by reducing the electric power fed into the electrically conductive leads over time. Thus, the heat input stays even over the shrinking time, and the risk of overheating is minimized. A person skilled in the art may understand that it is most crucial to transfer sufficient heat into the heat shrink product to initiate the shrinking. After that, much less energy is required, mainly to compensate heat losses.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:
- **FIG. 1**: is a schematic representation of a heat shrinking process;
- **FIG. 2**: is a schematic representation of a detail of a heating unit;
- **FIG. 3**: is a schematic representation of a detail of another heating unit;
- **FIG. 4**: is a schematic representation of a detail of another heating unit;
- **FIG. 5**: is a schematic representation of a detail of another heating unit;
- **FIG. 6**: is a comparison of several cross-sections of an electrically conductive lead according to the present invention;
- **FIG. 7**: is a comparison of the cross-section of a conventional resistance heating wire to several cross-sections of an electrically conductive lead usable with the present invention;
- **FIG. 8**: is a schematic representation of a detail of another heating unit usable with the present invention;
- **FIG. 9**: is a schematic representation of a detail of a heating unit according to an advantageous embodiment of the present invention;
- **FIG. 10**: is a schematic representation of a detail of a heating unit according to a further advantageous embodiment of the present invention;
- **FIG. 11**: is a schematic representation of a detail of a heating unit according to a further advantageous embodiment of the present invention;
- **FIG. 12**: is a detail of Fig. 11;
- **FIG. 13**: is a schematic representation of a detail of a heating unit according to a further advantageous embodiment of the present invention;
- **FIG. 14**: is a schematic representation of a detail of a heating unit according to a further advantageous embodiment of the present invention;
- **FIG. 15**: is a schematic representation of a detail of a heating unit according to a further advantageous embodiment of the present invention;
- **FIG. 16**: illustrates a step in the manufacturing of a heating unit;
- **FIG. 17**: is a schematic representation of a detail of a heating unit according to a further advantageous embodiment of the present invention;
- **FIG. 18**: illustrates the heat spreading mechanism of the heating unit according to Fig. 9;
- **FIG. 19**: illustrates the heat spreading mechanism of the heating unit according to Fig. 11;
- **FIG. 20**: illustrates the heat spreading mechanism of the heating unit according to a further advantageous embodiment;
- **FIG. 21**: illustrates the heat spreading mechanism of the heating unit according to a further advantageous embodiment;
- **FIG. 22**: illustrates the heat spreading mechanism of the heating unit according to a further advantageous embodiment;
- **FIG. 23**: illustrates the heat spreading mechanism of the heating unit according to a further advantageous embodiment;
- **FIG. 24**: illustrates the heat spreading mechanism of the heating unit according to a further advantageous embodiment;
- **FIG. 25**: is a schematic representation of a detail of a heat shrink component according to an advantageous embodiment of the present invention;
- **FIG. 26**: is a schematic representation of a detail of a heat shrink component according to a further advantageous embodiment of the present invention;
- **FIG. 27**: is a schematic representation of a detail of a heat shrink component according to a further advantageous embodiment of the present invention;
- **FIG. 28**: is a schematic representation of a detail of a heat shrink component according to a further advantageous embodiment of the present invention;
- **FIG. 29**: is a schematic representation of a detail of a heat shrink component according to a further advantageous embodiment of the present invention;
- **FIG. 30**: is a schematic representation of a detail of a heat shrink component according to a further advantageous embodiment of the present invention.

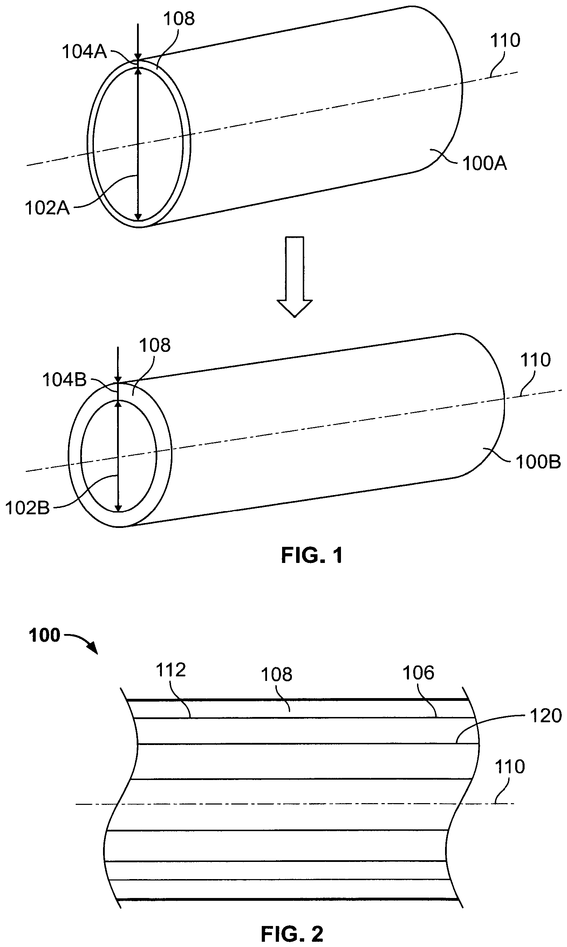

The present invention will now be further explained referring to the Figures, and firstly referring to Figure 1. Fig. 1 schematically illustrates the heat shrinking process of a heat shrinkable joint sleeve 100A, 100B. The heat shrink sleeve 100A is in the expanded state where it has first dimensions. In particular, the heat shrink sleeve 100A in the expanded state has an inner diameter 102A which is larger than the outer diameter of a component to be covered (not shown in the Figures) and a wall thickness 104A that is thinner than in the finally mounted state.

By applying heat, the heat shrink sleeve is transformed from the expanded state 100A into a heat shrink sleeve in the shrunk state 100B (indicated by the arrow). In order to be shrunk under the influence of heat, the sleeve 100 comprises at least one heat shrink layer 108.

The present invention utilizes a heat-recoverable article (an independently dimensionally heat-unstable article) as the heat shrink layer 108. Of course, the heat shrink layer can be fabricated from any suitable material, as this is known to a person skilled in the art. Moreover, also multilayer arrangements that additionally comprise elastic layers are encompassed by the present invention. Heat shrink layers and/or elastic layers may comprise electrically insulating and/or electrically semi-conductive and/or conductive layers or components.

The shrunk sleeve 100B has an inner diameter 102B that fits tightly over the covered component (not shown in the figures) and an enhanced wall thickness 104B as compared to the expanded state. As this is known to a person skilled in the art, the heat shrink process leads to a reduction of diameter of up to 75% of the diameter in the expanded state. As already mentioned above, the principles according to the present invention can be applied to straight tube shaped sleeves 100 as well as to differently shaped covers for branch joints, elbows, bends, and the like. The component onto which the sleeve 100 is shrunk may be cylindrical or it may have regions with a cross-section that is polygonal and/or that is varying along the longitudinal axis of the component.

According to the present invention, the heat shrinking step is performed by applying electrical energy via electrically conductive leads 106, for instance electrically conductive wires with an electrical conductivity of more than 1·10⁷ S/m. Figures 2 to 5 illustrate examples of how the electrically conductive leads 106 that form a heating unit 120 can be arranged on a heat shrink product. The leads 106 may be positioned with direct contact to a heat shrink layer or may be positioned on a layer of non-shrink material, such as an elastomeric layer or a thermoplastic layer. Terminals are led to the outside for connecting a power source (not shown in the figures). Preferably, the power source is a battery supplying a DC voltage of e. g. 24 V. The entire length of the electrically conductive lead 106 is determined by the particular diameter and the resistance value that is to be reached and amounts to around 1 to 15 m when choosing a diameter in a range of 0.1 mm to 0.4 mm.

As can be seen from Fig. 2, a plurality of elongated wire sections 112 may be arranged in parallel to a longitudinal axis 110 of the heat shrink sleeve 100. The individual wire sections 112 may be serially interconnected in the fashion of a meandering structure to form one continuous electrical lead 106. Additionally, some of the longitudinal sections 112 may be interconnected to form an elongated closed loop, a plurality of those loops being interconnected in parallel. The sections 112 may either be arranged on the outside or on the inner surface of the heat shrink sleeve 100. Moreover, they may also be covered by further layers (as will be explained later). The sections 112 may also be arranged in different planes seen from the centre line 110.

The embodiment with the longitudinal wire sections 112 has the advantage, that upon shrinking of the heat shrink layer 108 the wire sections 112 become arranged closer to each other, but are not significantly deformed or dislocated. If the covered component has a polygonal cross-section and/or has dimensions that vary along the longitudinal axis, the wire sections conform to this outer silhouette to some extent. Still, no sharp edges or disruptions during the heat shrinking process can occur. This means that separations or areas of increased resistance due to strong deformation of the wires are less likely. It is important to note that when using heating wires comprising copper and/or aluminium, their diameter is less than when using resistance wires. Therefore, the risk of breaks or increased resistance at points of strong deformation of the wire can be reduced.

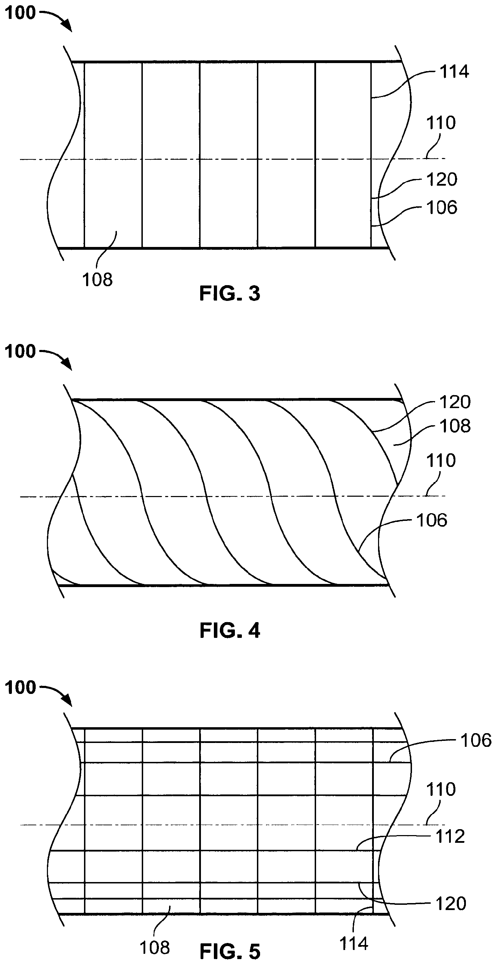

Fig. 3 shows an example where a plurality of ring-shaped wires 114 is arranged on the sleeve 100 to form the electrically conductive lead 106. These wire-rings 114 are arranged equidistantly along the longitudinal axis 110 and are essentially perpendicular to the longitudinal axis 110. Of course, the rings can also be arranged with varying distances between each other. Moreover, when using an elliptical shape instead of a circular geometry, the rings 114 can also be arranged to include an angle other than 90° with the longitudinal axis 110.

The rings 114 may electrically be connected in series and/or in parallel. For a serial connection, the rings may not be entirely closed around the circumference of the heat shrink sleeve 100.

Fig. 4 depicts an arrangement where one continuous electrically conductive lead 106 is wound in a helical configuration around the heat shrink layer 108. This configuration is particularly easy to be assembled. The windings may also be arranged with varying distances between adjacent turns.

It is apparent to a person skilled in the art that the above explained arrangements according to Figures 2, 3, and 4 can also be combined with each other as this is exemplarily depicted in Fig. 5. According to this embodiment, one layer of longitudinal sections 112 is combined with one layer of ring-shaped wires 114, wherein it is arbitrary which layer is the top layer and which one the bottom layer. Also more than two layers can be combined to form a heating unit according to the present invention. Electrically, these layers may either be connected in parallel and/or serially.

Advantageously, the wires in the different layers are to be electrically insulated against wires of another layer. This may be achieved by using wires that are individually covered with an electrical insulation and/or by arranging an insulating material between adjacent layers of wire.

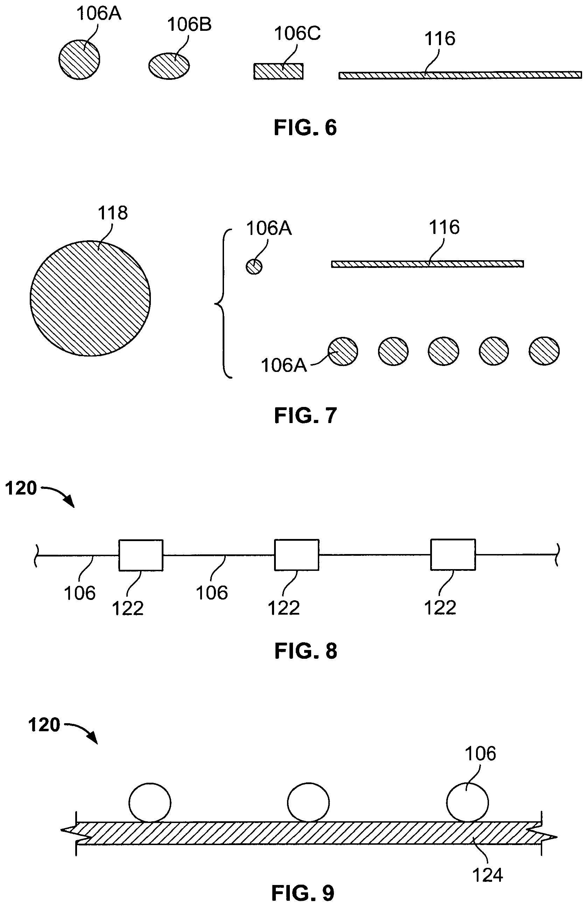

With reference to Figure 6, several examples of electrically conductive leads 106 according to the present invention are explained. The inventors of the present invention have recognized that an electrical resistance suitable for generating temperatures around 120°C and up to 450°C from safety voltages (e. g. 24 V DC) can also be realized with a highly conductive material when reducing the cross-sectional area and/or enhancing the length accordingly. The cross-section of the wires 106 may be circular (electrically conductive lead 106A), elliptic (electrically conductive lead 106B), or polygonal (electrically conductive lead 106C). Furthermore, the electrically conductive lead may also be formed by a thin film 116. It has to be noted, that the drawings are not exactly to scale throughout the Figures. In particular, the thickness of the electrically conductive film 116 is exaggerated.

The electrically conductive film 116 may for instance be formed from a metallization layer that is etched by means of a photolithography process. Alternatively, also screen printing or other printing techniques can be used for depositing the electrically conductive film 116 on the heat shrink layer, or on an additional layer, i. e. a thermoplastic film.

With reference to Figure 7, the electrical resistance of the electrically conductive lead according to the present invention will be explained in more detail. Fig. 7 shows arrangements that have the same electrical resistance, leading to the same heating effect when powered with the same voltage. In particular, the cross section of a standard resistance heating wire 118 is compared to a copper wire 106 or an electrically conductive copper film 116. When assuming that the copper wire 106A and the electrically conductive film 116 are having only 1% of the specific resistance of the resistance wire, they need to have a cross sectional area of only 1% of the cross-sectional area of the resistance wire 118 in order to provide the same overall resistance for a piece of lead having the same length.

Alternatively, a copper wire 106A having 20% of the cross-sectional area of the resistance wire 118 has the same resistance as the resistance wire 118, if the copper wire 106A has 5 times the length of the resistance wire 118.

Due to economic and reliability considerations, the number and diameter of the heating wires 106 needs to be within certain limits. In case that the wires 106 have very small diameters, their numbers and/or length need to be reduced. Otherwise, the resistance increases too much and voltages of 24 V or below cannot generate a sufficiently high current to heat up the wires to temperatures of at least 120°C. On the other hand, if the wires 110 have too large cross-sections, their resistance may become too low. Then the length has to be increased, in order to increase the resistance. Otherwise, the wires 106 would not be heated up sufficiently. Thereby costs are increased. A further option is to use (at least in particular areas of the heat shrink component) two or more electrical circuits of heating wires which are connected in parallel. The electrical current then splits up according to the relative resistance of the circuits. This allows choosing wires with smaller cross-sections, while achieving the same resulting resistance as with a larger size wire. In other words, two wires are connected in parallel and have each half of the cross-section compared to a benchmark wire. This principle, however, gets to some limits regarding economic considerations, such as the cost of fine wires relative to standard wires, and regarding reliability issues, because handling of extremely fine wires with diameters of less than 100 µm is cumbersome.

In addition to only using the electrically conductive lead 106 as the heating unit 120, also additional heating elements 122 can be provided. This embodiment is shown in Fig. 8.

According to one advantageous embodiment, the electrically conductive lead 106 generates only negligible amounts of heat. The main part of the heat is generated by the additional heating elements 122. The heating elements 122 may for instance be formed from semiconductor heating elements. The electrically conductive leads 106 that are interconnecting the heating elements 122 may either be formed as sections of wire, or by film-shaped electrically conductive leads. Any of the diameters explained with reference to Figure 6 can be employed.

Advantageously, the semiconductor heating elements 122 may have a positive temperature coefficient (PTC) so that an inherent overheating protection is provided.

Furthermore, according to a further advantageous embodiment, sensors may be added to the heat shrink component. These sensors can be configured to monitor and/or drive the heating and shrinking process and give feedback for instance to the cable jointer and/or the electric drive system e. g. whether the installation has been finished successfully. In particular, when realizing the heating unit as a thin film arrangement, the sensors and the heating unit can be formed on a common flexible substrate that is attached to the sleeve.

For all of the above illustrated arrangements of electrically conductive leads, the present invention proposes providing means for spreading the heat generated by the electrically conductive leads around the circumference of the heat shrink layer 108. A heat spreading layer 124 allows for a more even and faster energy input into the heat shrink layer 108. Furthermore, if the heat spreading layer is arranged between the heating wires 106 and the heat shrink layer 108, it is also suitable to avoid heat spikes and potential damage to the heat shrink layer 108.

As may be derived from Fig. 9, the heating unit 120 comprises (at least in particular areas of the heat shrink component 100) an additional heat spreading layer 124 according to the present invention. The heat spreading layer 124 may for instance be formed from metal, such as copper or aluminum, or from a polymer which is provided with an enhanced thermal conductivity by adding suitable fillers.

Furthermore, the heat spreading layer 124 may also comprise alternatively or additionally one or more metallic layers. Advantageously, the electrically conductive heating wires 106 should not come into direct contact with each other or an electrically conductive surface in order to avoid local short circuits that would influence the overall resistance of the entire heating system in an undefined way. Consequently, in case a metallic heat spreading layer 124 is provided in contact with the conductive leads 106, the individual leads may for instance be covered with a thin electrically insulating layer. In an exemplary arrangement, heating wires 106 may be attached to a heat shrink sleeve of a joint body in an axial direction (as shown in Figure 2), have a diameter of less than 400 µm and be circumferentially spaced from each other by about 5 mm to 30 mm. With this set up, a single film of copper or aluminium having a thickness of less than 400 µm is sufficient to remarkably contribute to an even shrinkage around the circumference of the joint body.

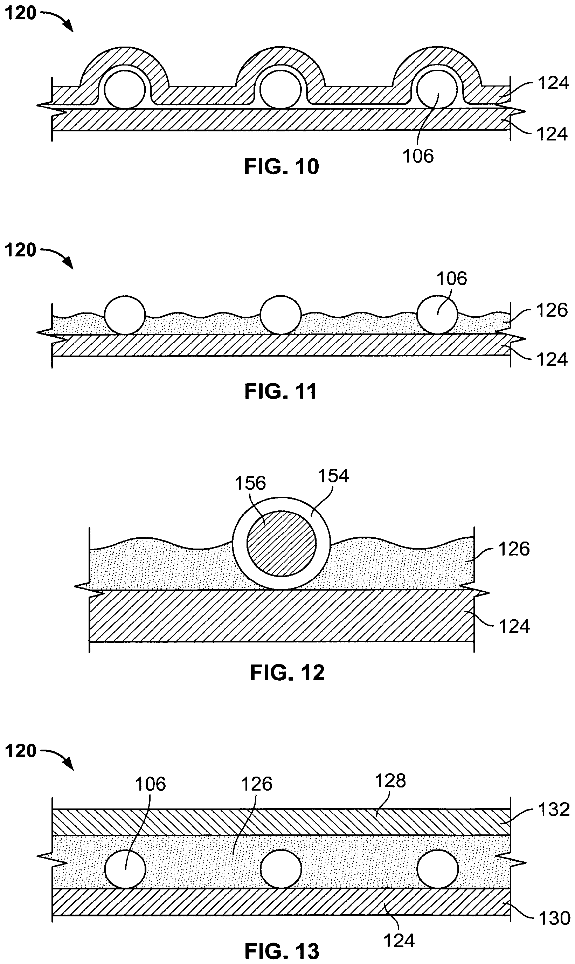

Fig. 10 shows a further advantageous arrangement, where a second heat spreading layer 124 is arranged to cover the electrically conductive leads 106.

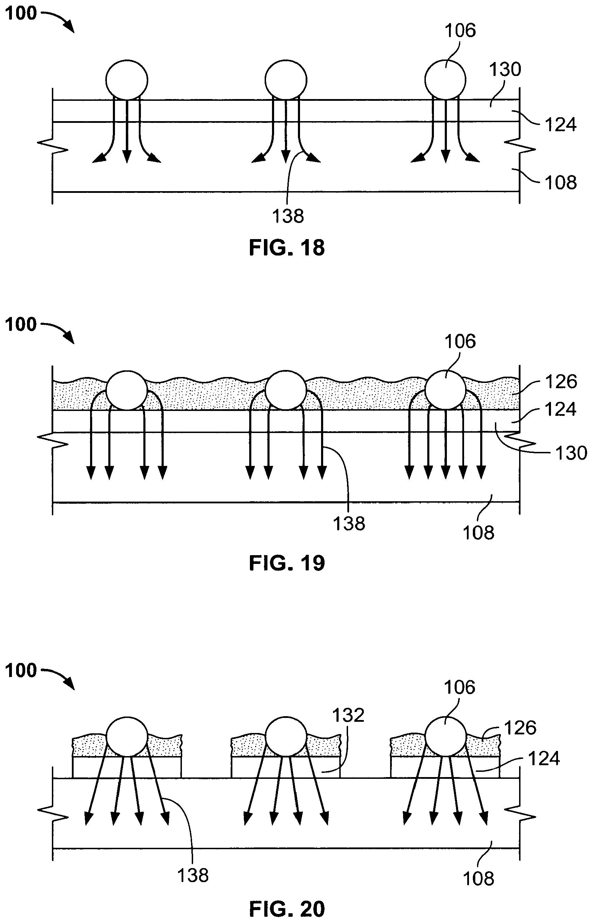

According to a further advantageous embodiment which is shown in Fig. 11, the electrically conductive leads 106 may at least partly be embedded within an embedding material 126. The embedding material 126 may for instance comprise an adhesive, a hot melt material, mastic, or a lubricant, or any other suitable material which at least partly encloses the electrically conductive lead 106 and improves the heat transfer towards the heat spreading layer 124, as will be explained in more detail with reference to Figures 18 to 24. Additional fillers in the above mentioned materials may improve the effect.

The electrically conductive leads 106 may comprise a metal lead 156 forming a core which is covered by an electrically insulating layer 154. This detail is depicted in Fig. 12. This arrangement is advantageous if the leads 106 may come into direct contact with a metal layer forming the upper surface of the heat spreading layer 124.

Fig. 13 illustrates a further advantageous embodiment of the heating unit 120. According to this embodiment, the electrically conductive leads 106 are completely surrounded by an embedding material 126. An additional cover layer 128 is arranged on top of the embedding material 126.

As shown in Figure 13, the heat spreading layer 124 may be formed from an electrically insulating plastic layer 130, and the cover layer 128 is formed from a metal layer 132. Due to the presence of an electrically insulating embedding material 126, the wires 106 do not necessarily have to be coated with an electrically insulating layer, but can be left bare.

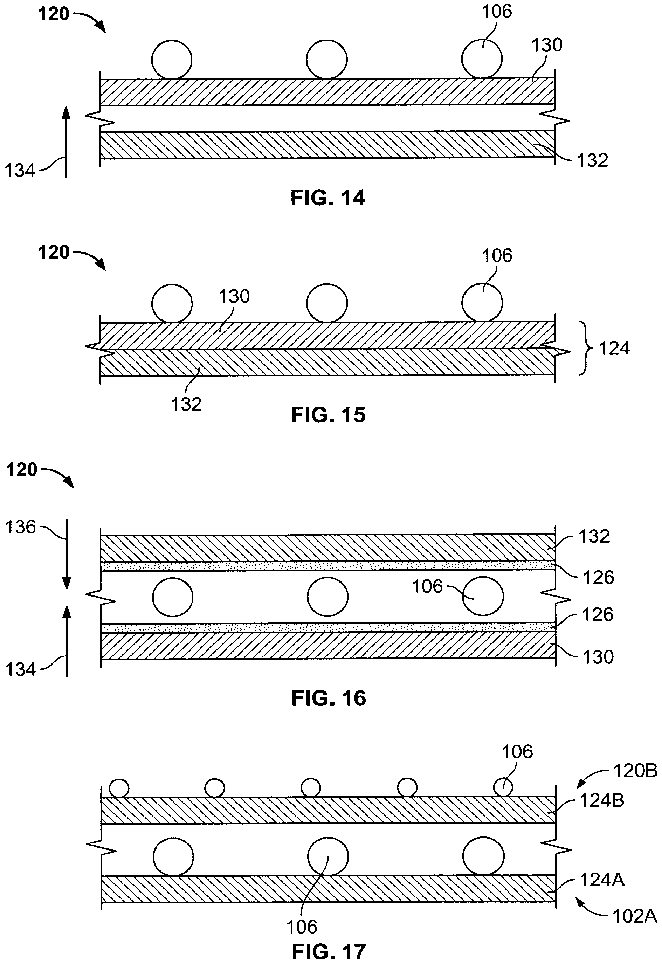

Fig. 14 and 15 illustrate a further advantageous embodiment of a heating unit 120 that allows for the heating wires 106 being without an insulation coating. According to this embodiment, the wires 106 are first attached to a plastic film 130. From the side opposing to the wires 106, a heat spreading metal layer 132 is attached as indicated by the arrow 134. Fig. 15 shows the finally assembled heating unit 120. The heat spreading layer 124 is therefore formed as a double layer comprising at least one metal layer 132 and at least one electrically insulating plastic layer 130.

According to a further advantageous embodiment as shown in Fig. 16, the metal layer 132 and the plastic layer 130 may both be covered with an adhesive that constitutes an embedding layer 126. The electrically conductive leads 106 are then sandwiched between these two films as indicated by the mounting directions 134 and 136. This embodiment has the advantage that the heating unit 120 can easily be handled. It has to be noted, that according to the present invention, the plastic layer 130 and/or the metal film 132 may function as a heat spreading layer 124. It may be freely chosen whether either the plastic layer 130 or the metal film 132 are arranged between the electrically conductive leads 106 and the heat shrink layer.

Fig. 17 shows a further advantageous embodiment with more than one heating unit 120A, 120B being stacked on top of each other. The heat spreading layer 124 may be formed from metal or plastic films. In order to avoid uncontrolled short circuits, the electrically conductive leads 106 may be coated with an electrically insulating layer, once metal films are used.

With reference to Figures 18 to 24, the heat spreading concept according to the present invention will be explained in more detail for various advantageous embodiments of the heat shrink component 100. Fig. 18 shows an advantageous embodiment, where a heating wire 106 is arranged on a heat shrink layer 108, for instance a heat shrink sleeve, with an additional plastic heat spreading layer 124. As indicated by the arrows 138, the heat flow is deviated in a way that the heat shrink layer 108 does not experience the same temperature peaks as it would experience if in direct contact with the wire 106. Accordingly, damages by excessive heat can be avoided at the heat shrink layer 108.

When additionally providing a layer of an embedding material 126, more heat arrives at the heat shrink layer 108 and the heat is more evenly distributed. This arrangement is depicted in Figure 19. The electrically conductive leads 106 do not have to be electrically insulated, if the embedding material 126 and the heat spreading layer 124 are electrically insulating. Preferably, however, an insulation is provided for reliability reasons.

With respect to the embodiments explained above it was always assumed, that the heat spreading layer 124 is a continuous layer which covers a larger part of the heat shrink layer 108. However, as illustrated in Fig. 20, the heat spreading material 124 may also only be provided close to the electrically conductive leads 106. Advantageously, the heat spreading material is formed by traces of metal film 132 directly underlying the electrically conductive wires 106. Advantageously, an adhesive forms the embedding material 126 which at least partly surrounds the wires 106 and facilitates handling during the manufacturing process.

As can be seen from a comparison with Fig. 19 where a plastic layer 130 is used, the arrangement according to Fig. 20 achieves almost the same degree of heat spreading, and in particular avoids spikes of high temperature at the heat shrink layer 108 to about the same degree. If the heat spreading layer is positioned only locally as shown in Fig. 20, then its thickness is preferably below 1 mm.

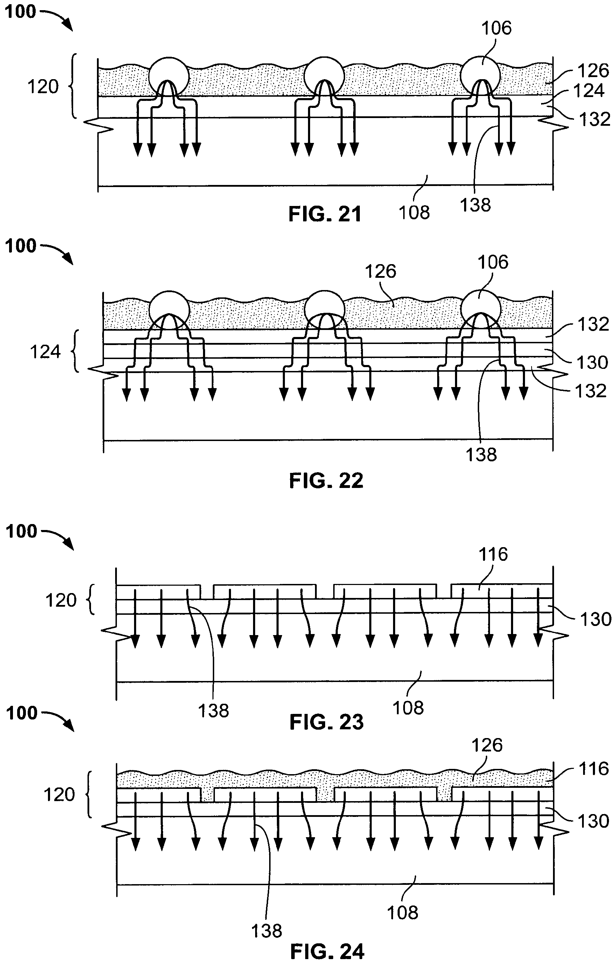

Fig. 21, on the other hand, shows an arrangement with a continuous metal film 132 forming the heat spreading layer 124. An embedding material 126 at least partly encompasses the electrically conductive leads 106. As schematically indicated by the arrows 138, the heat flow is distributed in a direction across to the thickness of the metal layer 132 within the plane of the metal layer 132 due to the high thermal conductivity of the material. Moreover, the heat flow is deviated in a way that the heat shrink layer 108 does not experience the same temperature peaks as it would experience if in direct contact with the wire 106. Accordingly, damages by excessive heat can be avoided at the heat shrink layer 108. By additionally providing a layer of an embedding material 126, more heat which is evenly distributed arrives at the heat shrink layer 108. The electrically conductive leads 106 do not have to be electrically insulated, if the embedding material 126 is electrically insulating.

Of course, one or more layers with higher and lower thermal conductivity may also be arranged preferably in an alternating manner to form a multilayer heat spreading layer. An example of such a multilayer heat spreading layer 124 is depicted in Fig. 22. According to this example, a heat spreading layer with a high thermal conductivity, for instance a metal layer 132, is arranged on the heat shrink layer 108. The metal layer 132 is covered by a layer with a lower thermal conductivity, for instance a plastic layer 130. The electrically conductive leads 106 are arranged on a second metal layer 132 which is deposited on top of the plastic layer 130. Advantageously, the electrically conductive leads 106 are embedded at least partially within an embedding material 126. As indicated by the arrow 138, the heat flow is strongly spread by the metal layers 132 within the respective plane of the layer. On its way from the wires 106 to the heat shrink layer 108, the heat is spread quite uniformly so as to provide an even energy input around the circumference of the heat shrink component 100 and to avoid any destructive temperature peaks at the heat shrink layer 108. With this arrangement and also with the arrangements explained referring to the other Figures, the heat spreading layer allows to run the heating wires at much higher temperatures, ensuring an accelerated shrinking process taking place more uniformly across the entire product.

A similar pattern of the heat distribution can be reached by forming the heating unit 120 from a flexible foil 130 with a printed pattern of electrically conductive film traces 116. The flexible foil 130 may for instance be a polymeric carrier film fabricated from polyimide (PI), comprising copper layers that form the electrically conductive traces 116, as shown in Fig. 23. Due to the fact that the electrically conductive film is in contact with its substrate not only along a comparatively small surface area as this is the case with wires having for instance circular cross-sections, the heat is already distributed over a larger area compared to a heating wire 106. Moreover, the PI foil 130 further spreads the generated heat as indicated by the heat flow arrows 138. Of course, an additional cover layer, preferably also fabricated from the same material as the carrier foil, may also be added. An additional metal layer arranged between the PI foil 130 and the heat shrink layer 108 (not shown in the Figure) increases heat transfer. Such a metal layer may also support to have only smaller pieces of such a heating system to be arranged on the heat shrink layer 108, thus reducing the costs in some cases.

Furthermore, as shown in Fig. 24, the electrically conductive film traces 116 may also be covered by an embedding material 126.

It has to be mentioned that there are commercially available plastic films with different layer thickness of copper (e. g. between 5 µm and 25 µm). These dimensions of course lead to different widths of the conductive films 116, thus covering the circumference to different percentages.

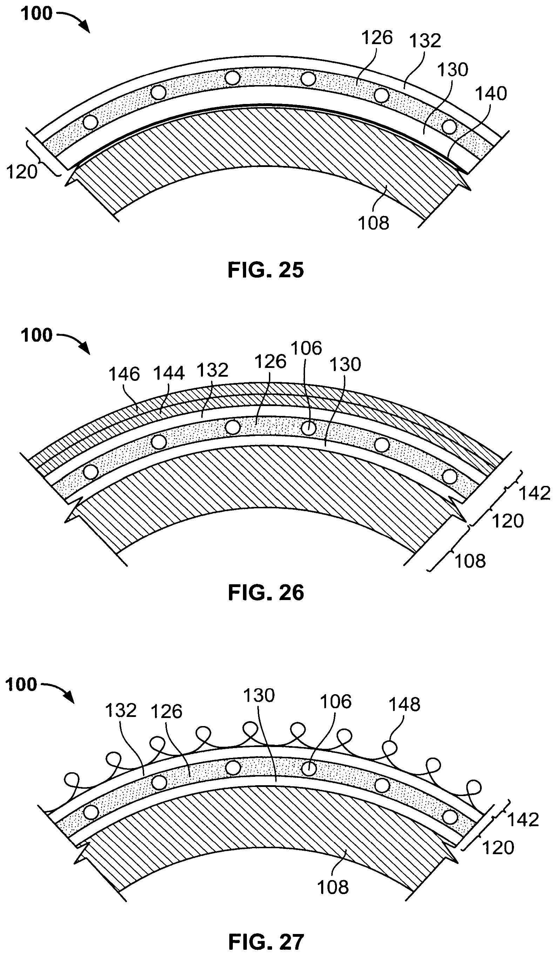

As already mentioned above, an intimate contact between the heating unit 120 and the heat shrink layer 108 is needed for an optimal heat transfer to the heat shrink layer 108. Fig. 25 shows an advantageous embodiment where the heating unit 120 is firmly bonded to the heat shrink layer 108 at the interface 140. The heating unit 120 shown in Fig. 25 is structured as shown in Fig. 13 exemplarily. It is clear for a person skilled in the art, however, that any of the other heating units according to the present invention may also be bonded to the surface of the heat shrink layer 108. Unless an adhesive is used for bonding the heating unit 120 to the heat shrink layer 108, it is advantageous that the layer of the heating unit 120 which is part of the interface 140 (or at least a surface layer) is a plastic material that can be chemically bound to the surface of the heat shrink layer 108.

According to a further advantageous embodiment of the present invention, one or more additional compressing layers 142 may be provided for pressing the heating unit 120 towards the heat shrink layer 108. Optimally, the compressing layer 142 keeps the heating unit 120 in close contact to the heat shrink layer 108 during the complete heat shrink procedure. However, some degree of delamination and therefore loss of the intimate contact can be tolerated and still allows a reasonable shrinking performance because the heating wires 106 also generate a noticeable amount of heating radiation. It is also important to transfer a high amount of heat energy into the heat shrink layer until it starts to contract. After that, a relatively small amount of heat is to be transferred. As shown in Fig. 26, the compressing layer 142 may comprise a second heat shrink layer 144 and/or a pre-stretched elastomeric layer 146.

Additionally, or alternatively, as shown in Fig. 27, the compressing element 142 may comprise a spring 148 or a spring system comprising a plurality of springs for pressing the heating unit 120 onto the heat shrink layer 108.

It has to be mentioned that the second heat shrink layer 144 and the pre-stretched elastomeric layer 146 may be formed as more than one short ring.

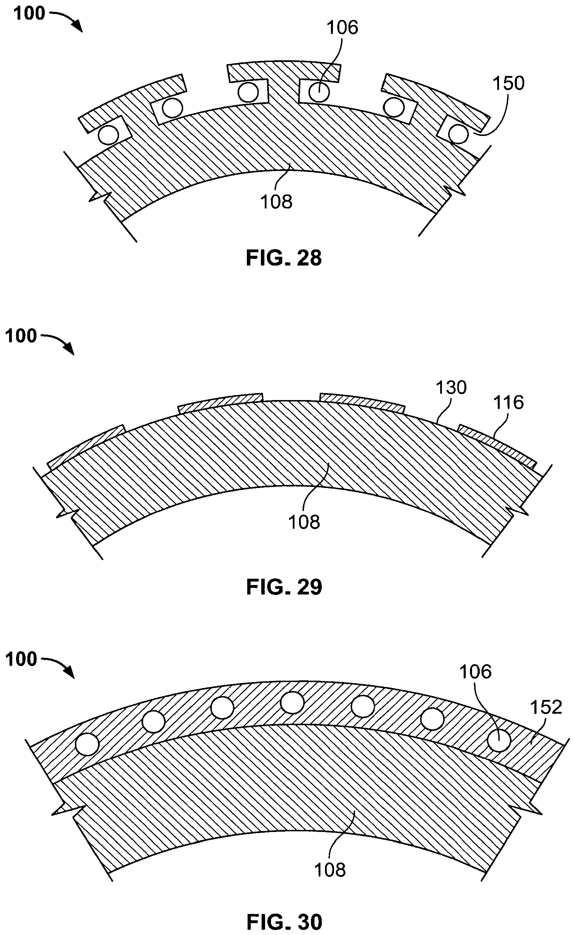

Figures 28 to 30 show examples of how the electrically conductive lead 106 can be brought into tight, albeit heat spreading contact with the heat shrink layer 108. Firstly, as shown in Fig. 28, the electrically conductive lead may be received in accordingly formed recesses 150 of the heat shrink layer 108, thereby establishing a form fit. Moreover, the electrically conductive leads 106 can be embedded in an embedding material (not shown in this Figure). A heat spreading layer (not shown in the Figure) may be added to encompass the arrangement.

In case that the electrically conductive lead is formed by an electrically conductive film 116, same can be attached to the heat shrink layer 108 directly or via an electrically insulating film 130. This arrangement is shown in Fig. 29. For instance, a thin, structured metal film 116 can be bonded to the surface, or the conductors 116 are printed onto the surface of the heat shrink layer 108. Alternatively, as this is known for printed circuit board (PCB) fabrication, the surface of the heat shrink layer 108 may also be coated with a metal layer which is then patterned by means of an etching step.

Furthermore, as shown in Fig. 30, the electrically conductive leads 106 may also be embedded within an embedding material and/or additional heat shrink layer 152 that is in tight contact with the heat shrink layer 108. The embedding step may for instance be performed by co-extrusion.

It has to be noted that with any of the embodiments explained above, air pockets have to be avoided because the air expands from room temperature to 120 °C and above remarkably, resulting in air bubbles that are large enough to hinder a sufficient heat spreading and/or generate unwanted deformations of the heat shrink product. Thus, the heat shrink component may be damaged unless the presence of air bubbles is avoided to a sufficient extent.

In summary, the present invention provides options to shrink widely used energy products, like LV, MV, and even HV joint bodies, terminations, sleeves (such as rejacketing sleeves), and molded parts (such as break outs, boots, and caps) without using an open flame and instead using electrical energy. Because the application typically is a field installation, the power source beneficially uses batteries, either available in the van of the cable jointer staff or to be carried to the place of installation. Alternatively, a generator, either available in the van or transportable over limited distances, can be used. For safety reasons, the voltage can be limited to values in the magnitude of 20 V, at maximum 24 V. In order to be compatible with installation times that are reached using open flames, the shrink times of a typical MV joint body should not exceed a maximum of 10 minutes.

In order to achieve short shrink times, heating wires and films may have temperatures as high as possible, preferably above the destruction temperatures of the heat shrink products. Means to avoid temperature spikes mainly address the issue of local destruction. Furthermore, the means may help significantly to spread heat energy to be transferred into the heat shrink component, ensuring that the heat transfer ideally happens all over the entire surface area.

A further advantage of the heat spreading layer is to act as thermal insulation against the environment and to create an additional heat capacity, which both improve the overall quality and reliability of the heat shrink process.

The present invention provides concepts for achieving an even shrinkage around the entire circumference of the heat shrink component. As mentioned above, a more even shrinkage around the circumference can happen during two major phases: firstly, when heating up the heat shrink component and during its visible shrinking, and secondly, after the heat shrink product has essentially shrunk onto the substrate.

For achieving an even shrinkage around the circumference during heating up the heat shrink component and during its visible shrinking, firstly a heat spreader can be provided that covers most of the circumference of the heat shrink component. These parts may cover distinct amounts of the circumference, have a certain wall thickness and/or number of layers to spread heat or be multilayered with thermally more insulating materials.

Furthermore, wires having a larger cross-section can be used in order to create the need for a longer length and for facilitating the handling during the manufacturing process.

Moreover, the number of heating units can be increased and the positioning of heating units may be modified, for instance in different layers as explained with reference to Fig. 5.

Furthermore, conductive films of specific dimensions can be used for heating up. It should be noted that galvanized copper films for this application may be in the range of 5 µm to 25 µm and above. In order to create the same cross-section of the film as the copper wires used according to the present invention (e. g. diameter: 0.22 mm, cross-section: 0,038 mm²), the width of the films would be 7.6 mm for a thickness of 5 µm, 4.2mm for a thickness of 9 µm, and 1.5 mm for a thickness of 25 µm.

Principles to enable even shrinkage around the circumference after the heat shrink product has essentially shrunk onto the substrate include using thickwall, multilayered heating systems and/or additional layers to create more heat capacity (e. g. the arrangements shown in Fig. 11, 14, 22 can be used for this). Secondly, materials with higher heat capacity can be used: metals like copper and aluminum, polymers like polyethylene, polyimide, as well as hot melts, mastics as conformable layers optionally with high filler levels to store more heat. The arrangement according to Fig. 24 is a specific embodiment of this idea because the layer 152 can be seen as a layer to take up heat energy apart from just spreading which then will be transferred into the heat shrink sleeve to improve the shrinkage results.

The present invention can advantageously be employed with the following exemplary specific dimensions and characteristics.

Although any kind of heating wires can be used according to the present invention, in addition to conventional resistance wires also wires with a conductivity of at least 1·10⁷ S/m can be used. The power source provides preferably a voltage that is a DC voltage below 60 V or an AC voltage of 25 V RMS.

Moreover, the cross-sectional area of the heating conductor is between 0.007 mm² and 0.8 mm², equaling to wires of 0.1 to 1.0 mm diameter. Conductive films must have according dimensions, typically these films have thicknesses in the range of 5 µm to 25 µm. The temperature of the conductor during the heating is at least 120 °C, max. 450 °C. The value of 120°C is a typical shrink temperature for heat shrink products. There are variants that shrink at 110°C and a very special material which is not used on energy products starts to shrink at 65°C. Given temperature losses to the environment, the temperature of the conductors must be far above 120°C.

The above parameters define a broad working space. Depending on the geometry of the heat shrink product and the conductors the heating system can be defined for instance according to the following examples.

A typical MV joint body has a wall thickness of 3.5 mm of the heat shrink layer (plus elastomeric layer), a length of 420 mm and an outer diameter of 68 mm (surface area is 9 dm²). In successful trials six heating units with 3.3 meter of wire each (diameter 0.22 mm) were used. With a power source providing 24 V these six heating units were connected in parallel and heated up to 200°C to 350°C temperature of the wires. The shrink time was 10 min, using thermal insulation and heat spreading means.

If the wire diameters are chosen smaller, then each heating unit must have less meters of wire. Accordingly, more than six heating units are to be configured to allow a 24 V power source to heat up the heat shrink component to the required temperatures. Other successful trials used resistance wires with a diameter of 0.8 mm and a length of 4 m, providing two metal layers having a thickness of less than 300 µm as heat spreading layer.

If another heat shrink product has less surface area, then a lower number of heating units (thus less meters of wire) are needed.

If another heat shrink product has a lower wall thickness, then a comparably lower number of heating systems and less meters of wire are needed. The dependency on the wall thickness does not seem linear. It appears that even a stack of multiple heat shrink sleeves resulting in 10 mm total wall thickness can be heated with about the same settings as the typical MV joint body having a wall thickness of 3.5 mm. There is, of course, a dependency on the overall shrink behavior of the particular heat shrink material. By adapting the composition of the heat shrink material, the shrink temperature and the ease of shrinking can be varied.

**REFERENCE NUMERALS**

| **Reference Numeral** | **Description** |
|---|---|
| 100, 100A, 100B | Heat shrink sleeve, heat shrink component |
| 102A, 102B | Inner diameter |
| 104A, 104B | Wall thickness |
| 106, 106A, 106B, 106C | Electrically conductive lead |
| 108 | Heat shrink layer |
| 110 | Longitudinal axis |
| 112 | Longitudinal wire section |
| 114 | Wire ring |
| 116 | Electrically conductive film |
| 118 | Resistance wire |
| 120,120A, 120B | Heating unit |
| 122 | Heating element |
| 124 | Heat spreading layer |
| 126 | Embedding material |
| 128 | Cover layer |
| 130 | Plastic layer |
| 132 | Metal layer |
| 134 | Mounting direction |
| 136 | Mounting direction |
| 138 | Heat flow |
| 140 | Interface between heat shrink layer and heating unit |
| 142 | Compressing element |
| 144 | Second heat shrink layer |
| 146 | Elastomeric layer |
| 148 | Spring |
| 150 | Recess |
| 152 | Additional heat shrink layer |
| 154 | Electrically insulating layer on metal lead |
| 156 | Metal lead |

## Claims

1. Heat shrink component that has first dimensions (102A, 104A) in an expanded state and second dimensions (102B, 104B) in a shrunk state, at least one of the first dimensions (102A) being larger than the corresponding second dimension (102B) and said heat shrink component (100, 100A, 100B) comprising:
a heat shrink sleeve with a heat shrink layer (108), and
at least one heating unit (120) that is arranged on a surface of the heat shrink sleeve and in thermal contact to at least a part of said heat shrink layer (108), said heating unit (120) being operable to heat up the heat shrink layer (108) to its heat shrink temperature,
wherein the heating unit (120) comprises at least one electrically conductive lead (106, 116) for being heated by an electrical current flowing through the lead (106, 116), and at least one heat spreading layer (124, 132) arranged in thermal contact to the at least one electrically conductive lead (106, 116) for distributing the heat generated by the electrically conductive lead (106, 116);
wherein the electrically conductive lead (106, 116) is at least partly embedded within an embedding material (126);
wherein the at least one heat spreading layer (124, 132) is composed of metal layers or layers with a high thermal conductivity distributing the heat energy in a direction along the circumference of the heat shrink component (100), and the heat shrink layer (108) is formed at least partly as a sleeve with a longitudinal axis (110) for covering at least one electrical connection.

2. Heat shrink component according to claim 1, wherein at least one heat spreading layer (124) is arranged at least partly between the at least one electrically conductive lead (106, 116) and the heat shrink layer (108).

3. Heat shrink component according to one of the preceding claims, wherein at least one heat spreading layer (124) is arranged to at least partly encompass the at least one electrically conductive lead (106, 116) and the heat shrink layer (108).

4. Heat shrink component according to one of the preceding claims, wherein the heating unit (120) further comprises at least one thermally insulating layer (130).

5. Heat shrink component according to claim 1, wherein the embedding material (126) comprises an adhesive and/or a hot melt material or a mastic or a lubricant.

6. Heat shrink component according to one of the preceding claims, wherein the heating unit (120) is arranged on an outer surface of the heat shrink layer (108) and wherein the heat shrink component (100) further comprises a compressing element (142), the electrically conductive lead (106) being arranged between said compressing element (142) and the heat shrink layer (108), so that the compressing element (142) presses the electrically conductive lead (106) towards the heat shrink layer (108) at least partly while the heat shrink layer is heated, preferably at least during a phase of heating up the heat shrink layer.

7. Heat shrink component according to claim 6, wherein said compressing element (142) comprises a spring (148) and/or an elastomeric sleeve (146) and/or a heat shrink sleeve (144).

8. Heat shrink component according to one of the preceding claims, wherein the at least one electrically conductive lead (106, 116) has an electrical conductivity of more than 1·10⁷ S/m.

9. Heat shrink component according to one of the preceding claims, wherein the electrically conductive lead (106) is formed by an electrically conductive film (116) or wherein the electrically conductive lead (106) is formed by a metal wire having a cross-section with a round, oval, or polygonal shape, and/or wherein the electrically conductive lead (106) comprises copper and/or aluminium, and/or wherein the at least one heat spreading layer (124) comprises copper and/or aluminium.

10. Method of assembling a heat shrink component that has first dimensions (102A, 104A) in an expanded state and second dimensions (102B, 104B) in a shrunk state, at least one of the first dimensions (102A) being larger than the corresponding second dimension (102B) and the method comprising the following steps:
providing the heat shrink component (100) in the expanded state, said heat shrink component (100) comprising a heat shrink sleeve with a heat shrink layer (108), and
at least one heating unit (120) that is arranged on a surface of the heat shrink sleeve and in thermal contact to at least a part of said heat shrink layer (108), said heating unit (120) being operable to heat up the heat shrink layer (108) to its heat shrink temperature,
wherein the heating unit (120) comprises at least one electrically conductive lead (106, 116) and at least one heat spreading layer (124) arranged in thermal contact to the at least one electrically conductive lead (106, 116) for distributing the heat generated by the electrically conductive lead (106, 116);
wherein the electrically conductive lead (106, 116) is at least partly embedded within an embedding material (126), wherein the at least one heat spreading layer (124) is composed of metal layers or layers with a high thermal conductivity distributing the heat energy in a direction along the circumference of the heat shrink component (100), and the heat shrink layer (108) is formed at least partly as a sleeve with a longitudinal axis (110) for covering at least one electrical connection;
connecting an electrical power source to the heating unit (120);
heating up the heating unit (120) for at least a part of the time, preferably until the heat shrink component (100) starts shrinking to the second dimensions.

11. Method according to claim 10, wherein electric power fed into the electrically conductive leads (106) is reduced over time during the step of heating up the heating unit (120) and/or the heat shrink component.

12. Method according to claim 10 or 11, wherein the power source is operable to provide a DC voltage that is below 60 V or an AC voltage of 25 V RMS to heat up the heat shrink component (100) to a temperature of at least 120 °C during a heating time of 20 min or less.

## Patentansprüche

1. Warmschrumpf-Komponente, die erste Abmessungen (102A, 104A) in einem gedehnten Zustand und zweite Abmessungen (102B, 104B) in einem geschrumpften Zustand hat, wobei wenigstens eine der ersten Abmessungen (102A) größer ist als die entsprechende zweite Abmessung (102B) und die Warmschrumpf-Komponente (100, 100A, 100B) umfasst:
einen Warmschrumpf-Schlauch, der eine Warmschrumpf-Schicht (108) aufweist, sowie
wenigstens eine Erhitzungs-Einheit (120), die an einer Fläche des Warmschrumpf-Schlauchs und in thermischem Kontakt mit wenigstens einem Teil der Warmschrumpf-Schicht (108) angeordnet ist, wobei die Erhitzungs-Einheit (120) so betrieben werden kann, dass sie die Warmschrumpf-Schicht (108) auf ihre Warmschrumpf-Temperatur aufheizt,
die Erhitzungs-Einheit (120) wenigstens eine elektrisch leitfähige Zuleitung (106, 116), die von einem durch die Zuleitung (106, 116) fließenden elektrischen Strom erhitzt wird, sowie wenigstens eine Wärmeverteilungs-Schicht (124, 132) umfasst, die in thermischem Kontakt mit der wenigstens einen elektrisch leitfähigen Zuleitung (106, 116) angeordnet ist, um die von der elektrisch leitfähigen Zuleitung (106, 116) erzeugte Wärme zu verteilen;
die elektrisch leitfähige Zuleitung (106, 116) wenigstens teilweise in einem Einbettungsmaterial (126) eingebettet ist;
und die wenigstens eine Wärmeverteilungs-Schicht (124, 132) aus Metall-Schichten oder Schichten mit einer hohen Wärmeleitfähigkeit besteht, die die Wärmeenergie in einer Richtung entlang des Umfangs der Warmschrumpf-Komponente (100) verteilen, und die Warmschrumpf-Schicht (108) wenigstens teilweise als ein Schlauch mit einer Längsachse (110) zum Abdecken wenigstens einer elektrischen Verbindung ausgebildet ist.

2. Warmschrumpf-Komponente nach Anspruch 1, wobei wenigstens eine Wärmeverteilungs-Schicht (124) wenigstens teilweise zwischen der wenigstens einen elektrisch leitfähigen Zuleitung (106, 116) und der Warmschrumpf-Schicht (108) angeordnet ist.

3. Warmschrumpf-Komponente nach einem der vorangehenden Ansprüche, wobei wenigstens eine Wärmeverteilungs-Schicht (124) so angeordnet ist, dass sie die wenigstens eine elektrisch leitfähige Zuleitung (106, 116) und die Warmschrumpf-Schicht (108) wenigstens teilweise umschließt.

4. Warmschrumpf-Komponente nach einem der vorangehenden Ansprüche, wobei die Erhitzungs-Einheit (120) des Weiteren wenigstens eine wärmeisolierende Schicht (130) umfasst.

5. Warmschrumpf-Komponente nach Anspruch 1, wobei das Einbettungsmaterial (126) einen Klebstoff und/oder einen Heißkleber oder einen Mastix oder ein Gleitmittel umfasst.

6. Warmschrumpf-Komponente nach einem der vorangehenden Ansprüche, wobei die Erhitzungs-Einheit (120) an einer Außenfläche der Warmschrumpf-Schicht (108) angeordnet ist und die Warmschrumpf-Komponente (100) des Weiteren ein Kompressionselement (142) umfasst, die elektrisch leitfähige Zuleitung (106) so zwischen dem Kompressionselement (142) und der Warmschrumpf-Schicht (108) angeordnet ist, dass das Kompressionselement (142) die elektrisch leitfähige Zuleitung (106), wenigstens teilweise während des Erhitzens der Warmschrumpf-Schicht, vorzugsweise wenigstens während einer Phase des Aufheizens der Warmschrumpf-Schicht, auf die Warmschrumpf-Schicht (108) zu drückt.

7. Warmschrumpf-Komponente nach Anspruch 6, wobei das Kompressionselement (142) eine Feder (148) und/oder einen Elastomer-Schlauch (146) und/oder einen Warmschrumpf-Schlauch (144) umfasst.

8. Warmschrumpf-Komponente nach einem der vorangehenden Ansprüche, wobei die wenigstens eine elektrisch leitfähige Zuleitung (106, 116) eine elektrische Leitfähigkeit von mehr als 1·10⁷ S/m hat.

9. Warmschrumpf-Komponente nach einem der vorangehenden Ansprüche, wobei die elektrisch leitfähige Zuleitung (106) durch einen elektrisch leitfähigen Film (116) gebildet wird oder die elektrisch leitfähige Zuleitung (106) durch einen Metalldraht gebildet wird, der einen Querschnitt mit einer runden, ovalen oder polygonalen Form hat, und/oder die elektrisch leitfähige Zuleitung (106) Kupfer und/oder Aluminium umfasst, und/oder die wenigstens eine Wärmeverteilungs-Schicht (124) Kupfer und/oder Aluminium umfasst.

10. Verfahren zum Montieren einer Warmschrumpf-Komponente, die erste Abmessungen (102A, 104A) in einem gedehnten Zustand und zweite Abmessungen (102B, 104B) in einem geschrumpften Zustand hat, wobei wenigstens eine der ersten Abmessungen (102A) größer ist als die entsprechende zweite Abmessung (102B) und das Verfahren die folgenden Schritte umfasst:
Bereitstellen der Warmschrumpf-Komponente (100) in dem gedehnten Zustand, wobei die Warmschrumpf-Komponente (100) einen Warmschrumpf-Schlauch mit einer Warmschrumpf-Schicht (108), sowie
wenigstens eine Erhitzungs-Einheit (120) umfasst, die an einer Fläche des Warmschrumpf-Schlauchs und in thermischem Kontakt mit wenigstens einem Teil der Warmschrumpf-Schicht (108) angeordnet ist, wobei die Erhitzungs-Einheit (120) so betrieben werden kann, dass sie die Warmschrumpf-Schicht (108) auf ihre Warmschrumpf-Temperatur aufheizt,
wobei die Erhitzungs-Einheit (120) wenigstens eine elektrisch leitfähige Zuleitung (106, 116) sowie wenigstens eine Wärmeverteilungs-Schicht (124) umfasst, die in thermischem Kontakt mit der wenigstens einen elektrisch leitfähigen Zuleitung (106, 116) angeordnet ist, um die von der elektrisch leitfähigen Zuleitung (106, 116) erzeugte Wärme zu verteilen;
die elektrisch leitfähige Zuleitung (106,116) wenigstens teilweise in einem Einbettungsmaterial (126) eingebettet ist;
und die wenigstens eine Wärmeverteilungs-Schicht (124, 132) aus Metall-Schichten oder Schichten mit einer hohen Wärmeleitfähigkeit besteht, die die Wärmeenergie in einer Richtung entlang des Umfangs der Warmschrumpf-Komponente (100) verteilen, und die Warmschrumpf-Schicht (108) wenigstens teilweise als ein Schlauch mit einer Längsachse (110) zum Abdecken wenigstens einer elektrischen Verbindung ausgebildet ist;
Verbinden einer Stromquelle mit der Erhitzungs-Einheit (120);
Aufheizen der Erhitzungs-Einheit (120) über wenigstens einen Teil der Zeit, vorzugsweise bis die Warmschrumpf-Komponente (100) auf die zweiten Abmessungen zu schrumpfen beginnt.

11. Verfahren nach Anspruch 10, wobei den elektrisch leitfähigen Zuleitungen (106) zugeführter Strom während des Schrittes des Aufheizens der Erhitzungs-Einheit (120) und/oder der Warmschrumpf-Komponente im Verlauf der Zeit verringert wird.

12. Verfahren nach Anspruch 10 oder 11, wobei die Stromquelle so betrieben werden kann, dass sie eine Gleichspannung, die weniger als 60 V beträgt, oder eine Wechselspannung von 25 V RMS bereitstellt, um die Warmschrumpf-Komponente (100) während einer Erhitzungszeit von 20 min oder weniger auf eine Temperatur von wenigstens 120 °C zu erhitzen.

## Revendications

1. Composant thermorétrécissable qui présente des premières dimensions (102A, 104A) dans un état expansé et des deuxièmes dimensions (102B, 104B) dans un état rétréci, au moins une des premières dimensions (102A) étant plus grande que la deuxième dimension correspondante (102B) et ledit composant thermorétrécissable (100, 100A, 100B) comprenant :
un manchon thermorétrécissable avec une couche thermorétrécissable (108), et
au moins une unité chauffante (120) qui est disposée sur une surface du manchon thermorétrécissable et en contact thermique avec au moins une partie de ladite couche thermorétrécissable (108), ladite unité chauffante (120) étant exploitable pour porter la couche thermorétrécissable (108) à sa température de thermorétrécissement,
dans lequel l'unité de chauffage (120) comprend au moins un fil électriquement conducteur (106, 116) à chauffer par un courant électrique circulant à travers le fil (106, 116), et au moins une couche de diffusion de chaleur (124, 132) disposée en contact thermique avec l'au moins un fil électriquement conducteur (106, 116) pour distribuer la chaleur générée par le fil électriquement conducteur (106, 116) ;
dans lequel le fil électriquement conducteur (106, 116) est au moins partiellement incorporé au sein d'un matériau d'enrobage (126) ;
dans lequel l'au moins une couche de diffusion de chaleur (124, 132) est composée de couches de métal ou de couches présentant une thermoconductivité élevée distribuant l'énergie thermique dans une direction le long de la circonférence du composant thermorétrécissable (100), et la couche thermorétrécissable (108) est constituée au moins partiellement en tant que manchon avec un axe longitudinal (110) pour couvrir au moins une connexion électrique.

2. Le composant thermorétrécissable selon la revendication 1, dans lequel au moins une couche de diffusion de chaleur (124) est disposée au moins partiellement entre l'au moins un fil électriquement conducteur (106, 116) et la couche thermorétrécissable (108) .

3. Le composant thermorétrécissable selon l'une des revendications précédentes, dans lequel au moins une couche de diffusion de chaleur (124) est disposée pour au moins partiellement englober l'au moins un fil électriquement conducteur (106, 116) et la couche thermorétrécissable (108).

4. Le composant thermorétrécissable selon l'une des revendications précédentes, dans lequel l'unité de chauffage (120) comprend en outre au moins une couche isolée thermiquement (130).

5. Le composant thermorétrécissable selon la revendication 1, dans lequel le matériau d'enrobage (126) comprend un matériau adhésif et/ou à matière fondue ou un mastic ou un lubrifiant.

6. Le composant thermorétrécissable selon l'une des revendications précédentes, dans lequel l'unité de chauffage (120) est disposée sur une surface extérieure de la couche thermorétrécissable (108) et dans lequel le composant thermorétrécissable (100) comprend en outre un élément de compression (142), le fil électriquement conducteur (106) étant disposé entre ledit élément de compression (142) et la couche thermorétrécissable (108), de sorte que l'élément de compression (142 ) fasse pression sur le fil électriquement conducteur (106) vers la couche thermorétrécissable (108) au moins partiellement tandis que la couche thermorétrécissable est chauffée, de préférence au moins durant une phase de chauffage de la couche thermorétrécissable.

7. Le composant thermorétrécissable selon la revendication 6, dans lequel ledit élément de compression (142) se compose d'un ressort (148) et/ou d'un manchon en élastomère (146) et/ou d'un manchon thermorétrécissable (144).

8. Le composant thermorétrécissable selon l'une des revendications précédentes, dans lequel l'au moins un fil électriquement conducteur (106, 116) présente une conductivité électrique de plus de 1-10⁷ S/m.

9. Le composant thermorétrécissable selon l'une des revendications précédentes, dans lequel le fil électriquement conducteur (106) est constitué par un film électriquement conducteur (116 ) ou dans lequel le fil électriquement conducteur (106) est constitué par un fil de métal présentant une section de forme ronde, ovale ou polygonale, et/ou dans lequel le fil électriquement conducteur (106) comprend du cuivre et/ou de l'aluminium, et/ou dans lequel l'au moins une couche de diffusion de chaleur (124) comprend du cuivre et/ou de l'aluminium.

10. Procédé d'assemblage d'un composant thermorétrécissable qui présente des premières dimensions (102A, 104A) dans un état expansé et des deuxièmes dimensions (102B, 104B) dans un état rétréci, au moins une des premières dimensions (102A) étant plus grande que la deuxième dimension correspondante (102B) et le procédé comprenant les étapes suivantes :
fourniture du composant thermorétrécissable (100) dans un état expansé, ledit composant thermorétrécissable (100) comprenant un manchon thermorétrécissable avec une couche thermorétrécissable (108), et
au moins une unité chauffante (120) qui est disposée sur une surface du manchon thermorétrécissable et en contact thermique avec au moins une partie de ladite couche thermorétrécissable (108), ladite unité chauffante (120) étant exploitable pour porter la couche thermorétrécissable (108) à sa température de thermorétrécissement,
dans lequel l'unité de chauffage (120) comprend au moins un fil électriquement conducteur (106, 116) et au moins une couche de diffusion de chaleur (124) disposée en contact thermique avec l'au moins un fil électriquement conducteur (106, 116) pour distribuer la chaleur générée par le fil électriquement conducteur (106, 116) ;
dans lequel le fil électriquement conducteur (106, 116) est au moins partiellement incorporé au sein d'un matériau d'enrobage (126), dans lequel l'au moins une couche de diffusion de chaleur(124) est composée de couches de métal ou de couches présentant une thermoconductivité élevée distribuant l'énergie thermique dans une direction le long de la circonférence du composant thermorétrécissable (100), et la couche thermorétrécissable (108) est constituée au moins partiellement en tant que manchon avec un axe longitudinal (110) pour couvrir au moins une connexion électrique ;
connexion d'une source d'énergie électrique à l'unité de chauffage (120) ;
chauffage de l'unité de chauffage (120) pendant au moins une partie d'une durée, de préférence jusqu'à ce que le composant thermorétrécissable (100) commence à rétrécir jusqu'aux deuxièmes dimensions.

11. Le procédé selon la revendication 10, dans lequel une énergie électrique injectée dans les fils électriquement conducteurs (106) est réduite au fil du temps au cours de l'étape de chauffage de l'unité de chauffage (120) et/ou du composant thermorétrécissable.

12. Le procédé selon la revendication 10 ou 11, dans lequel la source d'énergie est exploitable pour fournir une tension CC qui est inférieure à 60 V ou une tension CA de 25 V RMS pour porter le composant thermorétrécissable (100) à une température d'au moins 120 °C au cours d'une durée de chauffage de 20 minutes ou moins.
